# FASCICULE DE BREVET EUROPEEN

(11) **EP 0 399 983 B1**
(45) Date de publication et mention de la délivrance du brevet: **12.10.1994**
(21) Numéro de dépôt: 90870073.5
(22) Date de dépôt: 16.05.1990
(51) Int. Cl.: H02H 3/04, H01H 9/54

(54) **Dispositif d'arrêt d'urgence pour installation industrielle**
"Not-Aus"-Einrichtung für Industrieinstallation
Emergency shutdown for industrial installation

(30) Priorité: 23.05.1989 BE 8900553
(43) Date de publication de la demande: 28.11.1990
(73) Titulaire: COCKERILL SAMBRE Société Anonyme dite:, B-4100 Liege (Seraing) (BE)
(72) Inventeur: Catale, Dante, B-4410 Vottem (BE); Arnone, Guiseppe, B-4330 Grâce-Hollogne (BE); Averna, Vicenzo, B-4570 Blégny (BE); Bolognin, Danielo, B-4330 Grâce-Hollogne (BE); Bourguignon, Jean-Louis, B-4157 Saint Sevrin (BE); Cagliardi, Mercurio, B-4230 Horion-Hozémont (BE); Pizzuto, Concetto, B-4130 Saint Nicolas (BE)
(74) Mandataire: Vanderperre, Robert

(56) Documents cités:
- US-A- 3 965 469
- PATENT ABSTRACTS OF JAPAN vol. 8, no. 86 (P-269)(1523) 19 avril 1984,& JP-A-59 003270 (TATEISHI) 09 janvier 1984,
- PATENT ABSTRACTS OF JAPAN vol. 10, no. 256 (P-493)(2312) 02 septembre 1986,& JP-A-61 82208 (MITSUBISHI) 25 avril 1986,

## Description

La présente invention concerne un dispositif destiné à être utilisé dans les installations électriques de chaînes de fabrication pour interrompre le circuit d'alimentation électrique de la chaîne en cas de défectuosité quelconque dans l'installation.

Des appareils connus de ce genre comprennent essentiellement un interrupteur normalement fermé répondant à un signal provenant d'un appareil de contrôle de l'installation industrielle. Un appareil exemplaire est le poste d'arrêt d'urgence de marque Télémécanique type XY2-CA120. Or, il se trouve que, par suite de défectuosités diverses dans l'appareil de protection lui-même, le rétablissement du circuit d'alimentation ne se fait pas après une interruption, empêchant ainsi le redémarrage de la chaîne de fabrication. Parmi les défectuosités souvent constatées, on peut citer par exemple : le blocage du mécanisme actionnant les contacts, l'oxydation des contacts, les contacts restant ouverts après le réenclenchement. Tous ces incidents obligent les surveillants à intervenir et à vérifier l'entièreté du circuit des dispositifs d'arrêt d'urgence.

L'invention a pour objet un perfectionnement aux dispositifs d'arrêt d'urgence afin de permettre le contrôle du bon état de fonctionnement du contact principal de ces dispositifs d'arrêt.

Cet objectif est atteint grâce à l'invention par un dispositif d'arrêt d'urgence pour une installation industrielle comprenant un interrupteur normalement fermé répondant à un signal provenant d'un appareil de contrôle de l'installation industrielle, lequel dispositif d'arrêt d'urgence comprend en outre un deuxième interrupteur normalement fermé, connecté en série avec le premier interrupteur, ledit deuxième interrupteur étant commandé par un bouton-poussoir. Un troisième interrupteur a un premier pôle connecté au point de jonction entre le premier interrupteur et le deuxième interrupteur et un deuxième pôle connecté à la masse à travers un dispositif de signalisation, le troisième interrupteur étant normalement ouvert et ayant son contact mobile couplé au contact mobile du deuxième interrupteur de manière que lorsque le deuxième interrupteur se trouve ouvert, le troisième interrupteur se trouve fermé et laisse passer un courant d'excitation pour actionner le dispositif de signalisation lorsque le premier interrupteur se trouve dans son état normalement fermé.

Lorsque le surveillant désire vérifier l'état de fonctionnement d'un dispositif d'arrêt d'urgence, il lui suffit d'appuyer sur le bouton-poussoir du deuxième interrupteur de contrôle du dispositif d'arrêt d'urgence : si le contact de l'interrupteur principal ainsi que tout le circuit électrique jusqu'à ce point précis sont bien fermés, le dispositif de signalisation sera actionné. Par contre, si le dispositif de signalisation reste au repos, cela indique au surveillant que l'interrupteur principal est défectueux. En passant en revue tous les dispositifs d'arrêt d'urgence, le surveillant peut ainsi vérifier aisément l'état de tous les interrupteurs principaux et localiser immédiatement un dispositif défectueux, puis faire procéder rapidement au dépannage voulu. Il en résulte un gain de temps appréciable lors des vérifications et une réduction sensible des temps d'arrêt de la chaîne de fabrication.

La solution proposée selon l'invention a en outre l'avantage de pouvoir être réalisée aisément sur les dispositifs en service et sans nécessiter de tirer des câbles supplémentaires. De plus, les manoeuvres de contrôle se font en toute sécurité car le deuxième interrupteur de contrôle isole complètement les circuits électriques de commande de l'engin surveillé, ce qui assure toute la sécurité voulue. Enfin, la solution selon l'invention permet en outre de surveiller l'état de la phase électrique sur laquelle sont connectés les interrupteurs d'urgence car si cette phase se trouvait à la masse, tous les dispositifs de signalisation resteraient au repos.

L'invention est exposée plus en détail dans ce qui suit à l'aide des dessins joints.

La figure 1 est un schéma d'un circuit de surveillance comprenant deux dispositifs d'arrêt d'urgence selon la technique antérieure.

La figure 2 est un schéma d'un circuit de surveillance comprenant deux dispositifs d'arrêt d'urgence selon l'invention.

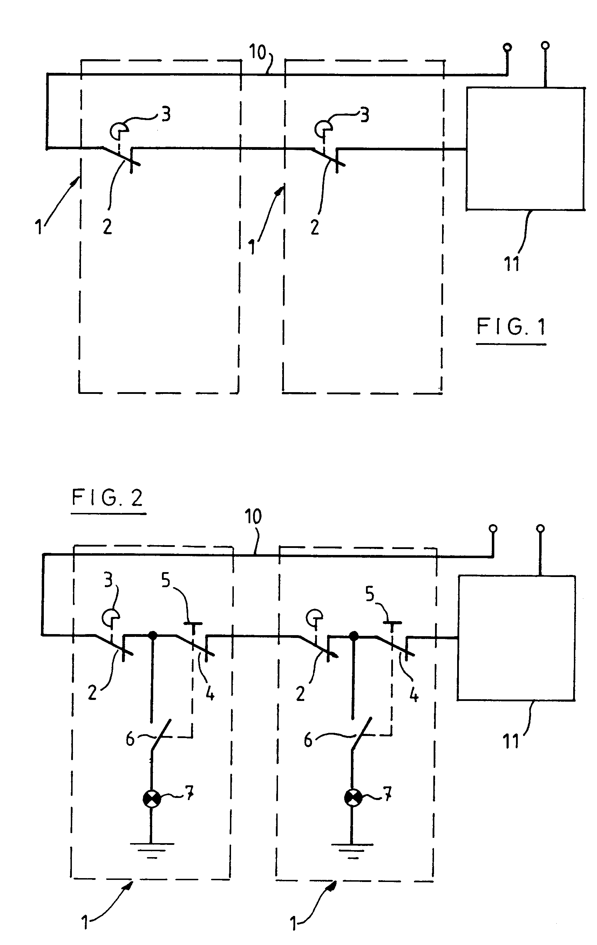

Se reportant à la figure 1, chaque dispositif d'arrêt d'urgence 1 consiste essentiellement en un interrupteur 2 commandé par un organe 3 répondant à un signal de commande provenant d'un organe de contrôle (non représenté) surveillant le fonctionnement d'un engin dans la chaîne de fabrication surveillée. Les interrupteurs 2 de tous les dispositifs d'arrêt d'urgence sont connectés en série dans la ligne 10 qui aboutit à un poste de commande 11.

La solution proposée selon l'invention est schématisée à la figure 2. L'interrupteur principal 2 de chaque dispositif d'arrêt d'urgence 1 est mis en série avec un deuxième interrupteur de contrôle 4 commandé par un bouton-poussoir 5 et le point de jonction entre les interrupteurs 2 et 4 du même dispositif d'arrêt d'urgence est relié à un premier pôle d'un troisième interrupteur 6 dont l'état est inverse de celui de l'interrupteurs 4. Le second pôle de l'interrupteur 6 est relié à la masse à travers un dispositif de signalisation quelconque, représenté ici par une lampe-témoin 7. Les contacts mobiles des interrupteurs 4 et 6 sont couplés de sorte que lorsque l'interrupteur 4 est manoeuvré, l'interrupteur 6 se trouve également actionné. En fonctionnement normal, les interrupteurs 2 et 4 en série sont fermés, de manière que le circuit de contrôle se trouve ininterrompu.

Lorsque le surveillant désire vérifier l'état de fonctionnement d'un dispositif d'arrêt d'urgence, il lui suffit d'appuyer sur le bouton-poussoir 5 de l'interrupteur de contrôle 4 du dispositif d'arrêt d'urgence 1 et lorsque le contact de l'interrupteur principal 2 ainsi que tout le circuit électrique jusqu'à ce point précis sont bien fermés, le dispositif de signalisation 7 doit être actionné. Si, au contraire, le dispositif de signalisation 7 reste au repos, cela indique au surveillant que l'interrupteur principal 2 est défectueux. En passant en revue tous les dispositifs d'arrêt d'urgence, le surveillant peut ainsi vérifier aisément l'état de tous les interrupteurs principaux et localiser immédiatement un dispositif défectueux, puis faire procéder rapidement au dépannage voulu. Il en résulte un gain de temps appréciable lors des vérifications et une réduction sensible des temps d'arrêt de la chaîne de fabrication.

La solution proposée selon l'invention a en outre l'avantage de pouvoir être réalisée aisément sur les dispositifs en service et sans nécessiter de tirer des câbles supplémentaires. De plus, les manoeuvres de contrôle se font en toute sécurité car l'interrupteur de contrôle 4 isole complètement les circuits électriques de commande de l'engin surveillé, ce qui assure toute la sécurité voulue. Enfin, la solution selon l'invention permet en outre de surveiller l'état de la phase électrique sur laquelle sont connectés les interrupteurs d'urgence car si cette phase se trouvait à la masse, tous les dispositifs de signalisation 7 resteraient au repos.

L'exemple décrit dans ce qui précède est un exemple donné à titre illustratif et l'invention n'est nullement limitée à cet exemple.

## Revendications

1. Dispositif d'arrêt d'urgence pour une installation industrielle, comprenant un interrupteur normalement fermé (2) répondant à un signal provenant d'un appareil de contrôle de l'installation industrielle, caractérisé en ce qu'il comprend en outre un deuxième interrupteur normalement fermé (4) connecté en série avec le premier interrupteur (2), ledit deuxième interrupteur (4) étant commandé par un bouton-poussoir (5), et un troisième interrupteur (6) ayant un premier pôle connecté au point de jonction entre le premier interrupteur (2) et le deuxième interrupteur (4) et ayant un deuxième pôle connecté à la masse à travers un dispositif de signalisation (7), le troisième interrupteur (6) étant normalement ouvert et ayant son contact mobile couplé au contact mobile du deuxième interrupteur (4) de manière que lorsque le deuxième interrupteur se trouve ouvert, le troisième interrupteur (6) se trouve fermé et laisse passer un courant d'excitation pour actionner le dispositif de signalisation (7) lorsque le premier interrupteur (2) se trouve dans son état normalement fermé.

## Patentansprüche

1. "Not-Aus"-Vorrichtung für eine Industrieanlage mit einem normalerweise geschlossenen Unterbrecher (2), der auf ein von einer Steuervorrichtung der Industrieanlage kommendes Signal reagiert, dadurch gekennzeichnet, daß sie ferner einen zweiten normalerweise geschlossenen Unterbrecher (4), der mit dem ersten Unterbrecher (2) in Reihe geschaltet ist, wobei der zweite Unterbrecher (4) durch einen Druckknopf (5) gesteuert ist, und einen dritten Unterbrecher (6) aufweist, dessen einer Pol mit dem Verbindungspunkt zwischen dem ersten Unterbrecher (2) und dem zweiten Unterbrecher (4) verbunden ist, und dessen zweiter Pol über eine Signalisiervorrichtung (7) mit Masse verbunden ist, wobei der dritte Unterbrecher (6) normalerweise offen ist und sein bewegbarer Kontakt mit dem bewegbaren Kontakt des zweiten Unterbrecher (4) derart gekoppelt ist, daß bei offenem zweiten Unterbrecher der dritte Unterbrecher (6) geschlossen ist und einen Erregerstrom durchläßt, um die Signalisiervorrichtung (7) zu betätigen, wenn sich der erste Unterbrecher (2) in seinem normalerweise geschlossenen Zustand befindet.

## Claims

1. Emergency shut-off device for an industrial installation, comprising a normally closed switch (2) which responds to a signal originating from a monitoring apparatus for the industrial installation, characterised in that it further comprises a second normally closed switch (4) connected in series to the first switch (2), said second switch (4) being controlled by a push button (5), and a third switch (6) having a first pole connected to the junction point between the first switch (2) and the second switch (4) and having a second pole connected to earth via a signalling device (7), the third switch (6) normally being open and having its movable contact coupled to the movable contact of the second switch (4) so that, when the second switch is open, the third switch (6) is closed and allows an exciter current to pass through in order to actuate the signalling device (7) when the first switch (2) is in its normally closed state.
